# EUROPEAN PATENT APPLICATION

(11) **EP 4 745 775 A1**
(43) Date of publication of application: **20.05.2026**
(21) Application number: 24306904.4
(22) Date of filing: 14.11.2024
(51) Int. Cl.: G06F 9/54, G06F 9/50

(54) **SIMPLIFIED ACCESS TO COMMUNICATION DEVICE**

(71) Applicant: SCHNEIDER ELECTRIC INDUSTRIES SAS, 92500 Rueil-Malmaison (FR)
(72) Inventor: DUFRENE, Pierre, 06100 Nice (FR); JOUVENEL, Patrick, 06800 Cagnes-sur-Mer (FR)
(74) Representative: Schneider Electric

(57) **Abstract**

For managing access to application agents by application clients, a broker server (BS) acting as a Publish/Subscribe data messaging system hosting topics and communicating with the application clients (AC) and the application agents (AA) via an external communication network (ECN), the application agents (AA) communicating with communication devices (CD) via different internal communication networks (ICN), wherein an application is deployed on the application clients (AC) and on the application agents (AA) and each application agent (AA) being able to execute at least one application function on at least one communication device (CD), a method comprises:
subscribing (S1), from an application client (AC), to topics related to presence of application agents (AA),
publishing (S2), from application agents (AA), presence messages (Pre) to topics related to presence of application agents (AA), each presence message containing a payload declaring an application function supported by the application agent,
publishing (S5), from the application client (AC) a request message (Req) on a request topic related to a given application function to execute, the request message (Req) containing as payload a request describing information to execute the application function,
receiving (S6), by application agents having subscribed to the request topic, said request message, and publishing (S6), by each of said application agents, a reply message (Rep) to a reply topic related to replies from application agents (AA), each reply message (Rep) indicating the capacity of the application agent (AA) to execute the given application function according to said request,
selecting (S7), by the application client (AC), one application agent (AA), based on the reply messages (Rep).

## Description

### FIELD OF INVENTION

The present invention generally relates to industrial automation systems, and more particularly relates to a mechanism for accessing automation devices which are connected to internal networks.

### BACKGROUND

In industrial automation systems, automation devices are normally connected to different internal networks, interconnected via network devices like routers and firewalls. To allow incoming connection from an external device, it is mandatory to configure properly the different network devices: e.g. firewalls, routers need to be properly configured to open internal networks to external request.

However, it is often complicated and dangerous to configure network devices (routers, firewalls, ...) to allow access to automation devices from external processes.

A software application can be deployed on several automation devices on different networks and handled by one or several application agents. The application which has to communicate with an automation device needs to know what communication infrastructure is implemented. It should know to which gateway/server it has to connect in order to communicate to the automation device. If application components deployed are modified, the application needs to know them and to reconfigure the way to communicate with the automation device.

There is therefore a need for simplifying access to application agents able to execute automation functions on automation devices.

### SUMMARY

This summary is provided to introduce concepts related to the present inventive subject matter. This summary is not intended to identify essential features of the claimed subject matter nor is it intended for use in determining or limiting the scope of the claimed subject matter.

In one implementation, there is provided a method for managing access to application agents by application clients, a broker server acting as a Publish/Subscribe data messaging system hosting topics and communicating with the application clients and the application agents via an external communication network, the application agents communicating with communication devices via different internal communication networks, wherein an application is deployed on the application clients and on the application agents and each application agent being able to execute at least one application function on at least one communication device, the method comprising:
subscribing, from an application client, to topics related to presence of application agents, publishing, from application agents, presence messages to topics related to presence of application agents, each presence message containing a payload declaring an application function supported by the application agent,
publishing, from the application client a request message on a request topic related to a given application function to execute, the request message containing as payload a request describing information to execute the application function,
receiving, by application agents having subscribed to the request topic, said request message, and publishing, by each of said application agents, a reply message to a reply topic related to replies from application agents, each reply message indicating the capacity of the application agent to execute the given application function according to said request,
selecting, by the application client, one application agent, based on the reply messages.

Advantageously, the method simplifies access to the devices regardless to which network the device are connected to. It can also provide some load balancing and allow system to scale properly.

The application client does not need to know how to reach a communication device, doesn't need to know which is the infrastructure in place to use to reach the communication device. The application client only needs to know that he wants to execute a function on a communication device, it does not need to know that the communication device use a specific protocol, this knowledge is only known by the application agent.

In an embodiment, the method further comprises:
publishing, by the application client, an execution message on an execution topic related to execution of the given application function identified, the execution message containing as payload an execution request describing how to execute the application function, wherein the execution topic includes an identifier of the selected application agent,
subscribing, by said selected application agent, to said execution topic, and receiving, by said selected application agent, the execution message,
executing, by said selected application agent, said given application function.

In an embodiment, the method further comprises:
publishing, by said selected application agent, a result message on a result topic related to the result of execution of the given application function, the result message containing as payload information related to the result of execution of the application function,

In an embodiment, application client subscribes to the reply topic related to replies from application agents.

In an embodiment, several application agents are able to execute completely or correctly the given application function according to all information included in the request, and the application client selects said one application agent according to a priority table.

In an embodiment, several application agents are able to execute completely or correctly the given application function according to all information included in the request, and the application client selects said one application agent based on availability of said several application agents.

In another implementation there is provided a computer-readable medium having embodied thereon a computer program for executing a method for managing access to application agents by application clients. Said computer program comprises instructions which carry out steps according to the method according to the invention.

### BRIEF DESCRIPTION OF THE FIGURES

The detailed description is described with reference to the accompanying figures. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:
FIG. 1 shows a schematic block diagram of a communication system according to one embodiment of the invention for managing access to application agents by application clients;
FIG. 2A illustrates an example of discovery phase of application agents by application clients;
FIG. 2B illustrates an example of selection phase of application agents by application clients;
FIG. 2C illustrates an example of execution phase by a selected application agent; and
FIG. 3 shows a flow chart illustrating a method for managing access to application agents by application clients according to one embodiment of the invention.

The same reference number represents the same element or the same type of element on all drawings.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

### DESCRIPTION OF EMBODIMENTS

The figures and the following description illustrate specific exemplary embodiments of the invention. It will thus be appreciated that those skilled in the art will be able to devise various arrangements that, although not explicitly described or shown herein, embody the principles of the invention and are included within the scope of the invention. Furthermore, any examples described herein are intended to aid in understanding the principles of the invention, and are to be construed as being without limitation to such specifically recited examples and conditions. As a result, the invention is not limited to the specific embodiments or examples described below, but by the claims and their equivalents.

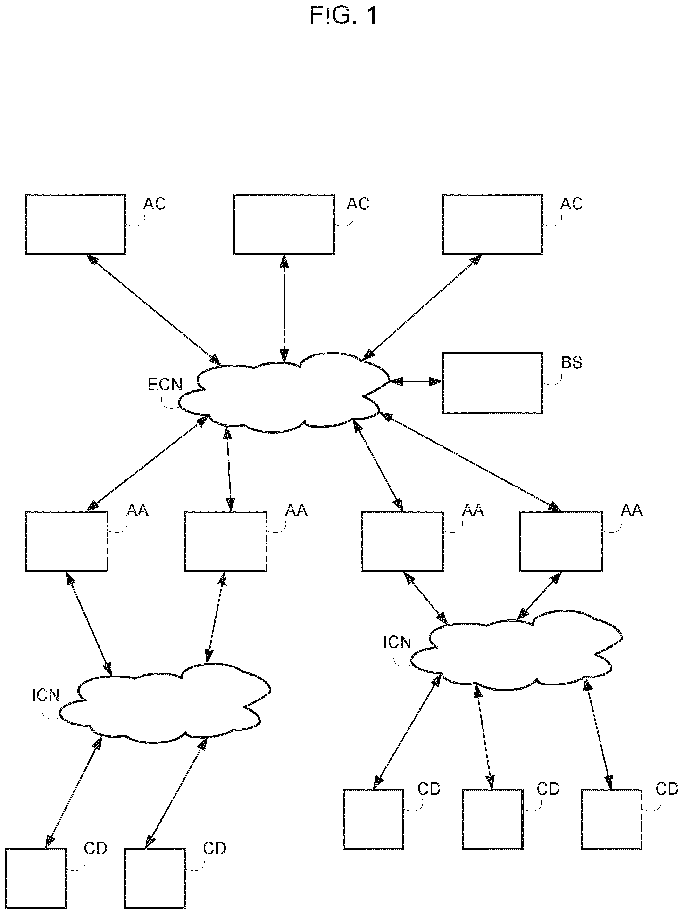

Referring to FIG. 1, a communication system implements publish/subscribe (pub/sub) communication model and comprises a broker server BS, a set of application clients AC, a set of application agents AA and a set of communication devices CD. The broker server BS communicates with the set of application clients AC and the set of application agents AA via an external communication network ECN. The set of application agents AA communicates with the set of communication devices CD via different internal communication networks ICN.

A communication device CD can include Analog to Digital Converter (ADC) and Digital to Analog Converter (DAC) for connecting to sensors and the real world, communications modules, digital inputs and outputs, relays, and more. A communication device may also be a gateway or a servo drive. A communication device communicates with the controller through a communication line with adapted packet formats.

The broker server BS is a Publish/Subscribe data messaging system enabling asynchronous information exchange between distributed systems by decoupling the senders and receivers of messages.

In one embodiment, the broker server BS is a MQTT (formerly Message Queuing Telemetry Transport) broker, based on an ISO standard (ISO/IEC PRF 20922) publish-subscribe-based "lightweight" messaging protocol for use on top of the TCP/IP protocol. In software architecture, publish-subscribe is a messaging pattern where senders of messages, called publishers, do not program the messages to be sent directly to specific receivers, called subscribers, but instead characterize published messages into classes without knowledge of which subscribers, if any, there may be. Similarly, subscribers express interest in one or more classes and only receive messages that are of interest, without knowledge of which publishers, if any, there are. MQTT is designed for connections with remote locations where a small code footprint is required or the network bandwidth is limited. The publish-subscribe messaging pattern requires a message broker. The broker is responsible for distributing messages to interested clients based on the topic of a message.

At least one application is deployed on the set of application clients AC and on the set of application agents AA. An application client AC is able to send a request to an application agent AA that is commanded to execute a function on a communication device CD.

An application client AC can be implemented in any type of control device dedicated to the management and maintenance of the automation system comprising the communication devices CD.

The application agents AA can be dedicated to a specific protocol (Ethernet/IP, OPCUA, ModbusTcp, Http, ...). The application agents AA are able to execute functions related to the application on specific communication devices. For example, an application function is "Get Identity, Locate, Diagnose, etc... ". Different application agents AA, that can be linked to different internal communication networks, can host same application functions. In one embodiment, an application agent AA can be implemented in any type of control node to manage the entire automation system linked to the internal communication network or a portion thereof. In one example, the application agent AA is an edge computer.

As the application clients AC and the communication devices CD are linked to different communication networks, an application client AC is not able to know how to reach a communication device CD. Exchanges of messages between the application clients AC and the application agents AA will be done via the broker server BS, allowing an application agent AA to execute an application function on a communication device upon request of an application client AC.

The broker server BS handles different topics that are hierarchical strings defining the subject or category of a message. When publishers send messages to the broker, they associate them with a specific topic. Subscribers express their interest in receiving messages by subscribing to one or more MQTT topics. The broker then routes messages to the appropriate subscribers based on their topic subscriptions.

Each application client AC subscribes to a topic "AgentsPresence/#" relating to the presence of an application agent AA. Each application agent AA publishes a message on the topic "AgentsPresence/<AgentId>" with a payload declaring which application functions are supported by the application agent AA.

Ine one embodiment, the published message has a Retain Flag set. Thanks to the Retain Flag, if an application agent AA is started first, when later an application agent AA connects to the broker server BS and subscribes to the topic "AgentsPresence/#", it will receive all retained messages (i.e. having a Retain Flag) and therefore will also know which application agents are available and what are their respective capabilities (supported application functions).

Ine one embodiment with the published message having a Retain Flag set, when the application agent AA connects to the broker server BS, it also instructs the broker server BS to send a Will Message to the topic "AgentsPresence/<AgentId>" with payload null and Retain Flag set. Then if for any reason the connection between the application agent AA and the broker server BS lost, the broker server BS itself will publish this message.

Thanks to this configuration an application client AC will always know and be updated about which are the available application agents AA and what are their respective capabilities. Regardless order of startup of Clients or Agents and taking into account cases where an agent disappear (for any reason: crash, disconnection, etc...

Once an application client AC has discovered available application agents AA and their capabilities, it will be then able to select the proper application agent AA to execute an application function as described hereinafter.

Furthermore, when an application agent AA starts based on the application functions it implements, it also subscribes to the following topic: "Candidate<FunctionId>". In addition, when an application client AC starts, it also subscribes to the following topic "AgentsReply<ClientId>".

When an application client AC wants to select an application agent AA to execute an application function, it then publishes on the topic "Candidate<FunctionId>" a request message with a payload containing information related to the application function. In one embodiment, the request message can contain also correlation data, like a "CallId" and an identifier "ClientId".

In one embodiment, as the application client AC knows how many application agents AA are implementing this application function, it waits for their answer with a given timeout.

All application agents AA implementing the application function will receive the request message, as they subscribed to the topic "Candidate<FunctionId>". Each of these application agents AA can interpret the request message to build a reply message, this reply message being published on the topic "AgentsReply<ClientId>", with a payload containing correlation data, including identifier "ClientId".

Based on this answer the application client AC having sent the request message will be able to select the best application agent AA to execute the application function.

In one example, the application function is a "Locate Function" and relates to location of a communication device CD. The request message sent by the application client AC contains information about on which communication device CD it wants to execute this application function and which kind of location it wants to execute, e.g. a sound or blinking. Based on this information, the application agent AA can answer this request by sending a reply message containing the following information as examples: "Yes I can execute a sound locate on this device", or "No I can't execute a sound locate on this device", or "Yes I can execute a sound locate on this device, but I am already busy with 100 devices".

Once the application client AC has an application agent AA to execute the application function, the application client AC can publish on a topic "<FunctionId><AgentId>" an execution message with as payload all needed information to execute the application function and as correlation data a CallId and his own ClientId.

Thanks to the selection done during candidate phase the application client AC is able to publish a message that will be received only by the selected application agent AA.

The selected application agent AA receives this execution message, executes the application function and publishes a result message on a topic "AgentsReply<ClientId>" the result of the execution of the application function.

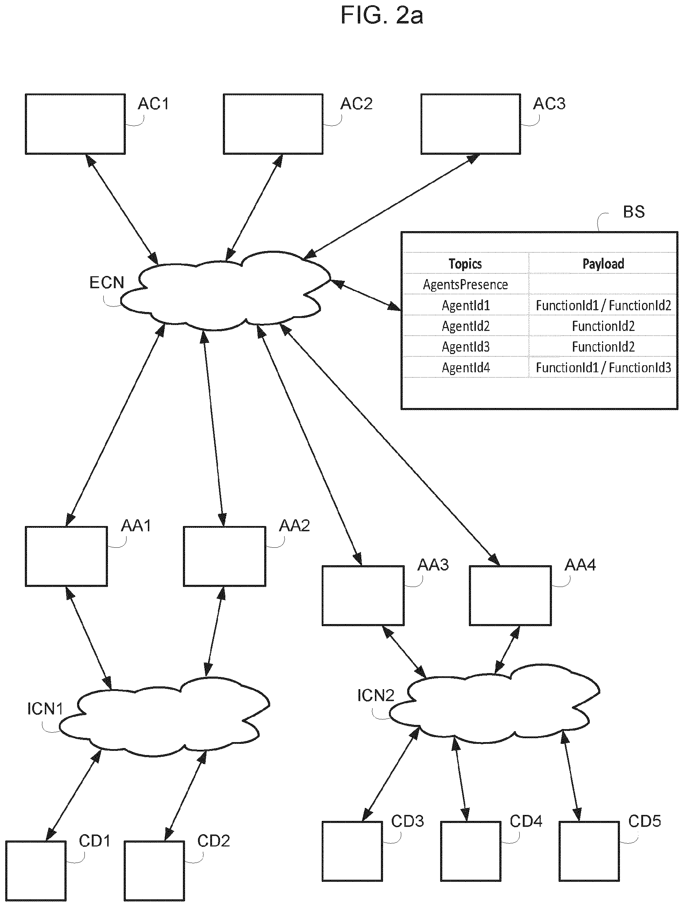

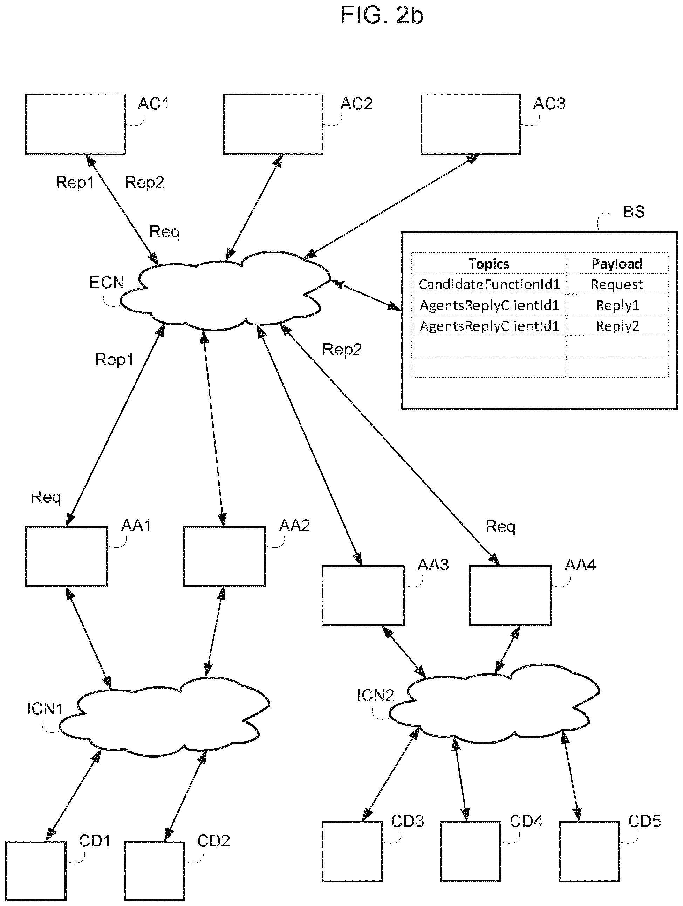

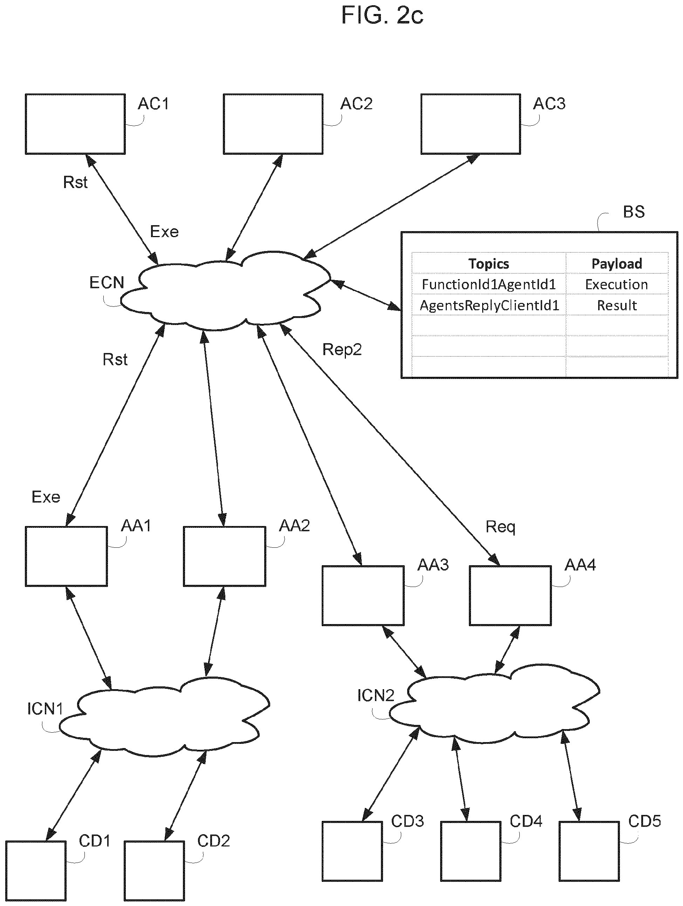

Referring to FIGS. 2A, 2B and 2C illustrating an example of deployment of an application in a communication system implementing a publish/subscribe (pub/sub) communication model, the application is deployed in three application clients AC1, AC2 and AC3 and in first application agent AA1, second application agent AA2, third application agent AA3 and fourth application agent AA4. Five communication devices CD1, CD2, CD3, CD4 and CD5 are split on a first internal communication network ICN1 and a second internal communication network ICN2.

The application agents AA1 and AA2 and the communication devices CD1 and CD2 are connected to the first internal communication network ICN1. The application agents AA3 and AA4 and the communication devices CD3, CD4 and CD5 are connected to the second internal communication network ICN2.

Furthermore, a first application function FunctionId1 is hosted by the application agents AA1 and AA4, a second application function FunctionId2 is hosted by the application agents AA1, AA2 and AA3, and a third application function FunctionId3 is hosted by the application agent AA4.

Referring to FIG. 2A, there is illustrated an example of discovery phase of application agents by application clients. The application clients AC1, AC2 and AC3 subscribe to the topic "AgentsPresence/#" - listing subtopics of presence of each application agent. Each of the application agent AA1, AA2, AA3 and AA4 publishes a message on the topic "AgentsPresence/<AgentId> : application agent AA1 publishes a message with a payload declaring "FunctionId1 / FunctionId2" on topic "AgentsPresence/AgentId1", application agent AA2 publishes a message with a payload declaring "FunctionId2" on topic "AgentsPresence/AgentId2, application agent AA3 publishes a message with a payload declaring "FunctionId2" on topic "AgentsPresence/AgentId3, and application agent AA4 publishes a message with a payload declaring "FunctionId1 / FunctionId3" on topic "AgentsPresence/AgentId4.

Referring to FIG. 2B, there is illustrated an example of selection phase of application agents by application clients. Only application client AC1 is considered, publishing on the topic "CandidateFunctionId1" a request message Req containing as payload a request Request describing information to execute the application function FunctionId1. As only first application agent AA1 and fourth application agent AA4 are hosting the first application function application function FunctionId1, they receive the request message Req. In more details, first application agent AA1 has subscribed to the topic "CandidateFunctionId1" and "CandidateFunctionId2", second application agent AA2 has subscribed to the topic "CandidateFunctionId2", third application agent AA3 has subscribed to the topic "CandidateFunctionId2", and fourth application agent AA4 has subscribed to the topic "CandidateFunctionId1" and "CandidateFunctionId3".

The application client AC1 subscribes also to the topic "AgentsReplyClientId1" - like a concatenation of an "AgentsReply" prefix with the "ClientId1" identifier for the application client AC1- and is waiting for answers from first application agent AA1 and fourth application agent AA4 (as application client AC1 is aware that they are hosting application function FunctionId1).

For example, the request message Req contains a payload "Request" including information about execution of a locate function on communication device CD1 with a sound location.

The first application agent AA1 builds a reply message Rep1 with a payload "Reply1" indicating that the first application agent AA1 can execute a locate function on communication device CD1 with a sound location, this reply message being published on the topic "AgentsReplyClientId 1".

The fourth application agent AA4 builds a reply message Rep2 with a payload "Reply2" indicating that the fourth application agent AA4 can execute a locate function on communication device CD1 with a blinking location, this reply message Rep2 being published on the topic "AgentsReplyClientId1". In another example the payload "Reply2" indicates that the fourth application agent AA4 can execute a locate function on communication device CD1 with a sound location, but that the fourth application agent AA4 is already busy with other communication devices.

Based on the reply messages Rep1 and Rep2, the application client AC1 can select the first application agent AA1. Reason for this selection is that fourth application agent AA4 is not able to execute the right type of location function (blinking instead of sound) or is already busy and then first application agent AA4 is more available.

Referring to FIG. 2C, there is illustrated an example of execution phase by selected application agent. The first application agent AA1 subscribes to the topic "FunctionId1AgentId1" - concatenation of the "FunctionId1" identifier for the first application function with the "AgentId1" identifier for the application agent AA1-.

The application client AC can then publish on the topic "FunctionId1AgentId1" an execution message Exe with as payload "Execution" all needed information to execute the application function Fct1.

The first application agent AA1 receives the execution message Exe and can execute the application function Fct1. Then the first application agent AA1 publishes on the topic "AgentsReplyClientId1" a result message Rst with as payload "Result" information related to the result of execution of the application function Fct1.

Finally, the usage of the broker server (as MQTT Broker) allows to centralize connections and split the requests from the application client into two main phases: Candidate phase (discovery and selection of application agent) and Execution phase (by selected application agent).

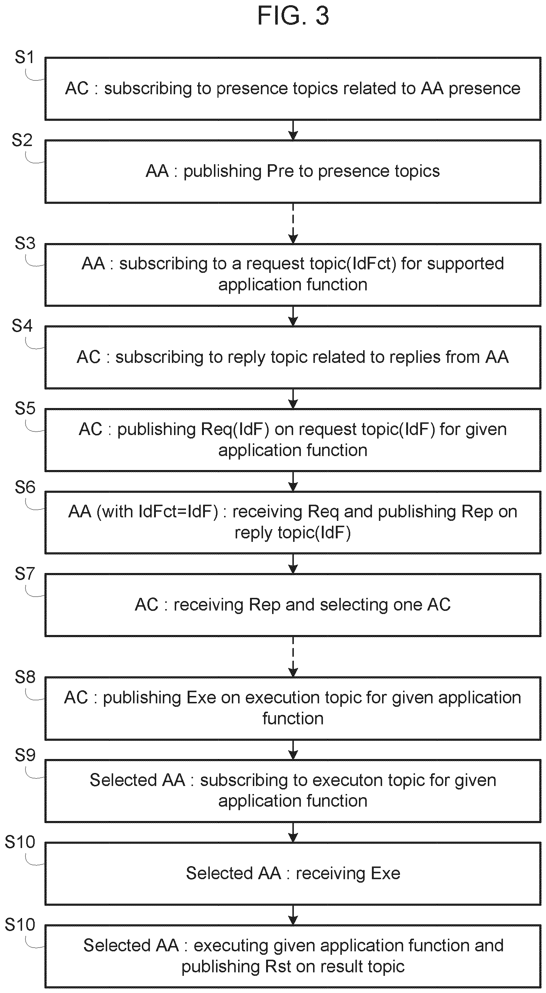

With reference to FIG. 3, a method for updating firmware of communication devices managed by a control device in an industrial system according to one embodiment of the invention comprises steps S1 to S 11.

Initially, an application is deployed on the application clients AC and on the application agents AA. Each application agent AA is able to execute at least one application function on at least one specific communication device. One application client AC needs to command the execution of a given application function, identified by a given identifier IdF of the given application function, on a given communication device CD, without knowing which application agent may be able to execute said given application function.

At step S1, an application client AA subscribes to presence topics "AgentsPresence/<AgentId>" related to presence of application agents AA.

At step S2, the application agents AA publish respectively presence messages Pre to presence topics respectively related to presence of the application agents AA, each presence message containing a payload declaring an application function supported by the application agent.

At this stage, the application client AC is aware of the available application agents and of their respective supported application functions.

At step S3, each application agent AA subscribes to at least one request topic related to an application function supported by the application agent and identified by an identifier IdFct of the application function.

At step S4, the application client AC subscribes to a reply topic related to replies from application agents AA and is waiting for answers from application agent AA supporting the application function.

At step S5, the application client AC publishes a request message Req on a request topic related to the given application function identified by the given identifier IdF of the given application function, the request message Req containing as payload a request describing information to execute an application function, including the given identifier IdF of the given application function.

Especially, the information may include an identifier of a communication device.

The request message is published on a request topic whose name depends only on the application function, so all potential application agents can respond to it to indicate whether they can execute it or not.

As the application client AC knows how many application agents AA are implementing the given application function, it can wait for their answer with a given timeout. In one embodiment, the application client AC can wait for all expected answer from all application agents AA implementing the given application function.

At step S6, only application agents AA supporting the given application function identified by the given identifier IdF of the given application function receive the request message Req. It means that these application agents AA had subscribed at step S3 to a request topic corresponding to the request topic on which the application client AC has published the request message Req, or in other words that the identifier IdFct of the application function supported by ab application agent corresponds to the given identifier IdF of the given application function.

Each of the application agents AA supporting the application function sends a reply message Rep to the reply topic related to replies from application agents AA, the reply message Rep indicating the capacity of the application agents AA to execute the application function according to said request.

At step S7, the application client AC receives the reply messages Rep published on the reply topic related to replies from application agents. The application client AC selects one application agent AA, based on the reply messages Rep. Said application agent AA is called now the selected application agent AA.

In one embodiment, only one application agent AA is able to execute completely or correctly the application function according to all information included in the request.

In another embodiment, several application agents AA are able to execute completely or correctly the application function according to all information included in the request, the application client AC selects one application agent AA according to a priority table.

In another embodiment, several application agents AA are able to execute completely or correctly the application function according to all information included in the request, the application client AC selects one application agent AA based on availability of said several application agents AA.

At step S8, the application client AC publishes an execution message Exe on an execution topic related to the given application function identified by the given identifier IdF of the given application function and related to the application agent AA identified by an identifier IdA of the application agent, the execution message Exe containing as payload an execution request describing how to execute the application function, including the identifier IdFct of the application function.

One application agent has been selected and therefore the execution message is posted on an execution topic whose name depends on the application function but also on the application agent. So only the selected application agent will receive the execution request.

At step S9, the selected application agent AA subscribes to the execution topic.

At step S10, the selected application agent AA receives the execution message Exe from the application client AC.

The order of steps S8 and S9 can be inverted, as the Publish/Subscribe mechanism allows the exchange of messages once all involved parties have subscribed and published to the topic.

At step S11, the selected application agent AA executes the application function and publishes on a result topic related to the result of execution of the application function a result message Rst with as payload information related to the result of execution of the application function. The application client AC may subscribe to the result topic during one of steps S8 to S10.

The method simplifies access to automation communication devices which are normally connected to internal networks. It allows also to access to the communication device without knowing communication details of the communication device endpoint like IP address or, ports. It allows also load balancing and redundancy of access to the communication device. As it is often complicated and dangerous to configure network devices (routers, firewalls, ...) to allow access to automation devices from external processes, the method simplifies this configuration by removing the need to allow incoming communication.

A person skilled in the art will readily recognize that steps of the methods, presented above, can be performed by programmed computers. Herein, some embodiments are also intended to cover program storage devices, for example, digital data storage media, which are machine or computer readable and encode machine-executable or computer-executable programs of instructions, where said instructions perform some or all of the steps of the described method. The program storage devices may be, for example, digital memories, magnetic storage media, such as a magnetic disks and magnetic tapes, hard drives, or optically readable digital data storage media.

Although the present invention has been described above with reference to specific embodiments, it is not intended to be limited to the specific form set forth herein. Rather, the invention is limited only by the accompanying claims and, other embodiments than the specific above are equally possible within the scope of these appended claims.

Furthermore, although exemplary embodiments have been described above in some exemplary combination of components and/or functions, it should be appreciated that, alternative embodiments may be provided by different combinations of members and/or functions without departing from the scope of the present disclosure. In addition, it is specifically contemplated that a particular feature described, either individually or as part of an embodiment, can be combined with other individually described features, or parts of other embodiments.

## Claims

1. A method for managing access to application agents by application clients, a broker server (BS) acting as a Publish/Subscribe data messaging system hosting topics and communicating with the application clients (AC) and the application agents (AA) via an external communication network (ECN), the application agents (AA) communicating with communication devices (CD) via different internal communication networks (ICN), wherein an application is deployed on the application clients (AC) and on the application agents (AA) and each application agent (AA) being able to execute at least one application function on at least one communication device (CD), the method comprising:
subscribing (S1), from an application client (AC), to topics related to presence of application agents (AA),
publishing (S2), from application agents (AA), presence messages (Pre) to topics related to presence of application agents (AA), each presence message containing a payload declaring an application function supported by the application agent,
publishing (S5), from the application client (AC) a request message (Req) on a request topic related to a given application function to execute, the request message (Req) containing as payload a request describing information to execute the application function,
receiving (S6), by application agents having subscribed to the request topic, said request message, and publishing (S6), by each of said application agents, a reply message (Rep) to a reply topic related to replies from application agents (AA), each reply message (Rep) indicating the capacity of the application agent (AA) to execute the given application function according to said request,
selecting (S7), by the application client (AC), one application agent (AA), based on the reply messages (Rep).

2. A method according to claim 1, the method further comprising:
publishing (S8), by the application client (AC), an execution message (Exe) on an execution topic related to execution of the given application function identified, the execution message (Exe) containing as payload an execution request describing how to execute the application function, wherein the execution topic includes an identifier (IdA) of the selected application agent,
subscribing (S9), by said selected application agent, to said execution topic, and receiving, by said selected application agent, the execution message,
executing (S10), by said selected application agent, said given application function.

3. A method according to claim 2, the method further comprising:
publishing (S10), by said selected application agent, a result message (Rst) on a result topic related to the result of execution of the given application function, the result message containing as payload information related to the result of execution of the application function.

4. A method according to any of previous claims, wherein application client subscribes to the reply topic related to replies from application agents.

5. A method according to any of previous claims, wherein several application agents (AA) are able to execute completely or correctly the given application function according to all information included in the request, and the application client (AC) selects said one application agent (AA) according to a priority table.

6. A method according to any of previous claims, wherein several application agents (AA) are able to execute completely or correctly the given application function according to all information included in the request, and the application client (AC) selects said one application agent (AA) based on availability of said several application agents (AA).

7. A computer-readable medium having embodied thereon a computer program for executing a method for managing access to application agents by application clients according to any of claims 1 to 6.
